# EUROPEAN PATENT SPECIFICATION

(11) **EP 2 722 297 B1**
(45) Date of publication and mention of the grant of the patent: **05.08.2015**
(21) Application number: 13188036.1
(22) Date of filing: 10.10.2013
(51) Int. Cl.: B65G 49/06, C03B 33/03, C03B 33/07

(54) **Machine for cutting a laminated glass plate with a waiting section provided with transport means**
Maschine zum Schneiden von einer verbundenen Glasscheibe unfassend eine Wartestation mit Fördereinrichtung
Machine de découpe d'une feuille de verre laminée comprenant une station tampon équipée de moyen de transport

(30) Priority: 16.10.2012 IT TO20120903
(43) Date of publication of application: 23.04.2014
(73) Proprietor: Biesse S.p.A., 61122 Chiusa di Ginestreto (Pesaro Urbino) (IT)
(72) Inventor: Aimar, Giacomo, 61122 Chiusa di Ginestreto (Pesaro Urbino) (IT); Sideri, Paolo, 61122 Chiusa di Ginestreto (Pesaro Urbino) (IT)
(74) Representative: Notaro, Giancarlo

(56) References cited:
- EP-A1- 2 431 339
- EP-A2- 2 433 886
- US-A1- 2007 020 067
- US-A1- 2008 110 205

## Description

### Field of the invention

The present invention relates to a machine for cutting a plate of laminated glass of the type comprising:
- a main surface for conveying the plate of laminated glass and the portions cut therefrom, provided with means for feeding the plate or portions of plate thereon in a longitudinal direction of the machine;
- at least one cutting bridge set in a fixed position over the conveying surface and oriented crosswise with respect to said longitudinal direction, for carrying out operations of cutting of the plate along a cutting line of the machine, transverse with respect to said longitudinal direction; and
- at least one device for imparting a rotation of 90° in the horizontal plane on a portion of plate in the form of cross-cut portion or in the form of cross-cut subportion after it has been obtained by a cutting operation carried out at the cutting bridge so that said cross-cut portion or cross-cut subportion can in turn be further divided into subportions.

### Prior art

Machines of the type referred to above are known, for example, from the documents Nos. EP 0 503 647 A, EP 1 975 131 A and EP 0 807 609 A. Machines of this type are used for cutting plates of laminated glass. Such plates comprise two plates of glass set on top of one another with a sheet of synthetic material set in between. These machines comprise a cutting bridge set in a fixed position over the conveying surface and oriented crosswise with respect to the aforesaid longitudinal direction, for carrying out the operations necessary for cutting the plate along a cutting line of the machine oriented crosswise with respect to the aforesaid longitudinal direction. Typically, the cutting bridge is provided with a top scoring tool and a bottom scoring tool, which are mobile in the aforesaid transverse direction, for scoring, respectively, the top plate of glass and the bottom plate of glass forming part of the laminated plate. Preferably, the cutting bridge is also provided with (top and bottom) breaking tools, which are mobile in the aforesaid transverse direction, for carrying out the breaking operation, respectively, on the bottom plate of glass and the top plate of glass that form part of the laminated plate. Finally, the cutting bridge is moreover provided with means for heating the sheet of synthetic material locally after scoring of the top and bottom plates of glass so that it is possible to carry out breaking and complete separation of the two portions of plate of laminated glass.

The document No. EP 2 275 388 A1 shows a machine of the type referred to above that comprises a waiting section upstream of a single cutting bridge, the waiting section having a single surface that can be raised with respect to the plate-conveying surface, to set a portion of plate in a waiting position.

Moreover, machines of the type referred to above, further comprising:
- a second cutting bridge set downstream of the first cutting bridge, and
- a waiting section situated between the first and second cutting bridges, so that said waiting section is able to accumulate a plurality of portions of plate, are known in the art, i.e. from document EP 2 431 339 A1.

The present applicant has proposed in the document No. EP 2 518 029, which forms part of the prior art in conformance with Article 54(3) EPC, a machine of the type referred to above having a second cutting bridge downstream of a first cutting bridge and a waiting section situated between the two cutting bridges comprising a rack having a plurality of shelves set on top of one another and apart from one another, which can be displaced vertically to bring any one of the shelves of the rack to the level of the main conveying surface so that the waiting section is able to accumulate a plurality of portions of plate on the shelves set on top of one another and at a distance apart.

### Object of the invention

The object of the present invention is to improve the prior proposal of the present applicant, by providing a machine for cutting plates of laminated glass that will enable even higher productivity, maintaining the capacity for accumulating portions of plate of glass that have been cut and are waiting to be further divided.

Another object of the invention is to provide a machine for cutting plates of laminated glass that does not require a substantial homogeneity of the dimensions of the individual portions in which the plate is to be divided for the purposes of high productivity.

A further object is to bestow on the machine a greater flexibility of use, making it possible at the same time to obtain the aforesaid results with a relatively simple and low-cost structure.

### Summary of the invention

With a view to achieving the above objects, the subject of the invention is a machine according to the annexed Claim 1.

Preferably, the rack comprises a plurality of cross members set on top of one another and vertically apart from one another, rigidly connected at their ends to two lateral uprights, two lateral supporting columns, vertically guided on which are the two lateral uprights, and a plurality of supporting arms that extend longitudinally in one or both directions starting from each cross member in such a way as to define the shelves of the rack, and the auxiliary conveying means comprise a plurality of belt conveyors associated to the longitudinal arms of the rack.

In one embodiment, in the proximity of the waiting section, the main conveying surface of the machine comprises a supporting bench, set both upstream and downstream of the waiting station, where the supporting bench is provided with longitudinal slits that are designed to be traversed by the supporting arms that extend longitudinally in both directions starting from each cross member of the rack. The supporting bench is provided with means for feeding the plate or portions of plate thereon in a longitudinal direction of the machine, and with means for keeping the plate raised with respect to the conveying surface so as to facilitate advance of the plate and its possible rotation in the horizontal plane by means of the rotation device.

In a preferred embodiment, the main conveying surface of the machine is interrupted in the area where the waiting section is present, and the supporting arms that extend longitudinally in both directions starting from each cross member of the rack define the main conveying surface for the plate of laminated glass and for the portions cut therefrom.

Once again in the currently preferred embodiment, associated to the supporting arms of the rack of the waiting section are lifting means that can be displaced between a lowered, resting, position and a raised, operative, position, in which the lifting means are activated for providing a surface on which the plate or a portion thereof can be moved and rotated.

Preferably, the lifting means comprise a plurality of pivoting wheels carried by a bar and distributed uniformly throughout the length of the supporting arms, and the bar is displaced between the lowered position and the raised position by means of fluid actuators.

In particular, in the waiting station only the lifting means associated to the longitudinal arm that is located in the proximity of the main conveying surface of the machine are brought into their raised, operative, condition, whereas the lifting means of the remaining arms remain in the lowered resting position.

### Brief description of the drawings

Further characteristics and advantages of the invention will emerge from the ensuing description with reference to the annexed drawings, which are provided purely by way of non-limiting example and in which:
- Figure 1 shows a top plan view of the machine proposed by the present applicant in the document No. EP 2 518 029;
- Figure 2 shows a schematic side view of the waiting station of the machine of Figure 1 in a different machining step, i.e., at the end of the operation of division of the first cross-cut portion;
- Figures 3 and 4 are perspective views of an embodiment of the waiting station W of the machine of Figures 1 and 2;
- Figures 5-7 are perspective views of different embodiments of the accumulation station W of the machine according to the present invention;
- Figures 8 and 9 are two side views of the accumulation section;
- Figure 10 is a perspective view of the accumulation section;
- Figure 11 is a top plan view of the accumulation section, during rotation of a plate; and
- Figures 12A and 12B show details of the accumulation section.

### Description of some embodiments of the invention

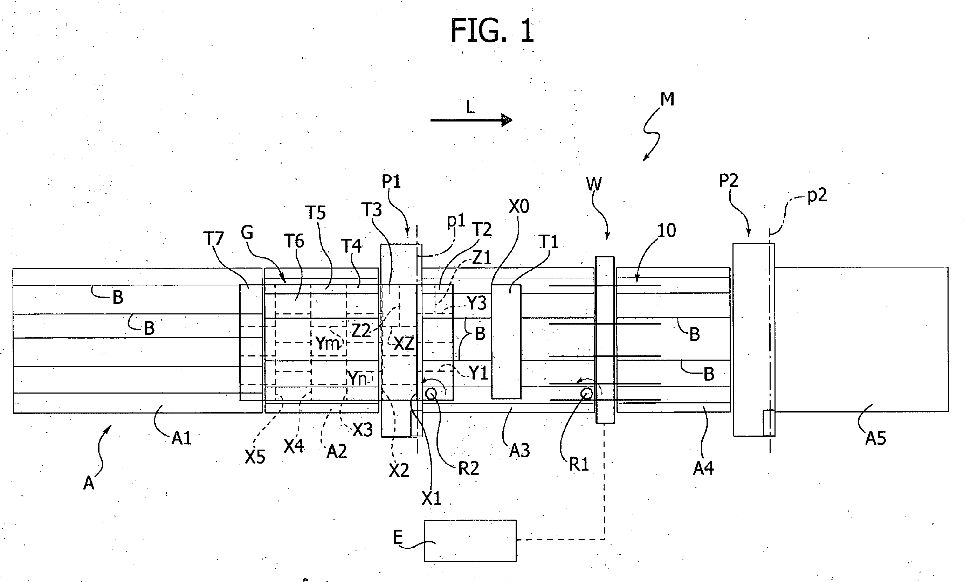

Figure 1 of the annexed drawings is a schematic top plan view of a machine of the type described in EP 2 518 029 (which forms part of the prior art in conformance with Art. 54(3) EPC), where two cutting bridges P1 and P2 are provided, one downstream of the other in the longitudinal direction L.

The machine according to the invention corresponds to the machine of Figure 1 in its general features, except for a different structure and constitution of the accumulation section W.

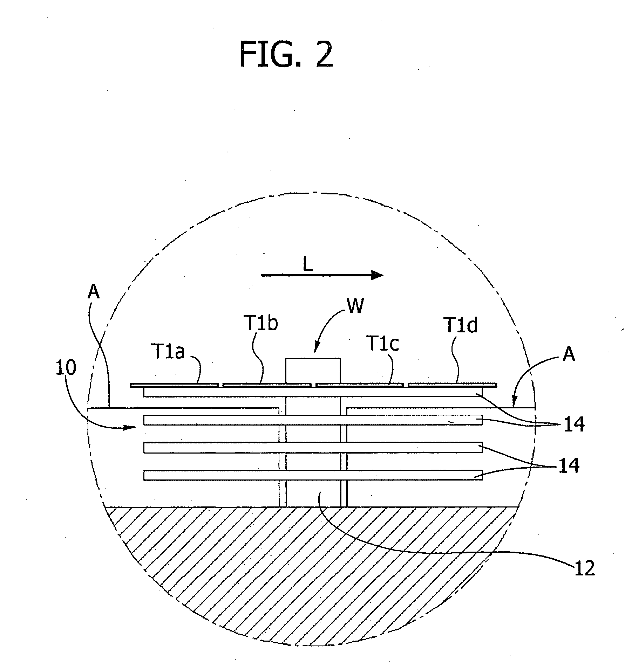

Figure 1 is also a top plan view of a plate of laminated glass G, in which indicated with dashed lines are the lines along which the plate is to be divided in order to obtain a plurality of smaller laminated plates. The plate G is to advance in the machine in a direction parallel to its longitudinal direction, designated by L in Figure 1. As may be seen in Figure 1, the laminated plate G is to undergo primary cuts X1, X2, X3, X4, X5 in directions X transverse with respect to the longitudinal direction L in order to define a plurality of transverse portions of plate, or cross-cut portions, T1, T2, T3, T4, T5, T6 and T7. In Figure 1 in particular, the bridge P1 has already performed the first cut, and the first cross-cut portion T1 has already been fed towards the waiting station W (visible in detail in side view in Figure 2, where the waiting station W is illustrated in a subsequent machining step, i.e., at the end of the operation of further division of the first cross-cut portion), whilst the bridge P1 is ready to cut the second cross-cut portion T2 along the cutting line X1 that has been brought up to a position corresponding to the cutting line p1 of the bridge P1.

Each of the cross-cut portions is to be divided in turn into a number of portions by means of a plurality of secondary cuts in the direction Y and if necessary also in the direction Z.

As may be seen, in the case of the example illustrated in Figures 1 and 2, there are envisaged five primary cuts X1-X5 (a first cut in X0 has already been performed and has given rise to the cross-cut portion T1), a plurality of secondary cuts in Y (Y1-Ym), and two secondary cuts in Z (Z1, Z2), so as to divide the entire plate G into a plurality of portions of plate.

The machine of Figure 1, designated as a whole by the reference M, comprises a conveying surface designated as a whole by A, typically constituted by a plurality of successive and adjacent sections A1, A2, A3, A4, A5 provided with conveying means (typically a plurality of endless conveyor belts B) for feeding the plate of laminated glass G resting on the surface A in the longitudinal direction L.

Figure 1 shows the machine M in the condition in which a first cutting operation has already been carried out on the plate G so as to define a first cross-cut portion T1. The figure shows the remaining part of the plate G ready for the second cut along X1, aligned with the cutting line p1.

A rotation through 90° of the cross-cut portion T1 is obtained manually in simpler machines and automatically in more advanced machines, provided with suction-pad gripping devices that engage the cut portion of plate, for example from beneath and impart thereon a rotation through 90°.

In Figure 1 the cross-cut portion T1 has been made to advance and, in case of need, may be rotated through 90° by the rotator R1, set in the vicinity of the waiting and accumulation station W.

The machine of Figure 1, provided with two cutting bridges P1 and P2, can be controlled so as to perform the cuts Y and Z on two cross-cut portions (for example T1, T2) simultaneously in order to increase productivity.

The machine is equipped with an electronic control unit E designed to control the means for feeding the plate G, the means for gripping and rotation of the portions of plate (if envisaged), and the various devices of the cutting bridges, according to a pre-set logic, which depends upon the layout of the cutting lines on the starting plate G.

Figures 1 and 2 do not show all the constructional details of the machine, for convenience of representation and so as to render the drawings more readily understandable. As is known to persons skilled in the branch, the machine of course comprises position-adjustable arrest means, associated to the conveying surface, which are used for stopping the plate G or its portions in the desired position underneath the cutting bridges P1 and P2 in order to carry out cutting of portions of a predetermined size of the plate. These arrest means are, for example, constituted, according to the known art, by arrest elements projecting through slits in the conveying surface and designed to engage the front edge of the portions of plate as these come to occupy a position corresponding to the cutting bridge to be used so as to stop them in the desired position. These arrest elements are typically carried, for example, by an auxiliary bridge oriented crosswise with respect to the longitudinal direction of the machine and mobile underneath the conveying surface, by means of motor-driven means that are also controlled by the electronic control unit.

Likewise illustrated schematically in Figure 1 is the electronic control unit E already described above, which is programmed for controlling, according to a pre-set logic, operation of the conveyor belts of the various sections of the conveying surface A1, A2, A3, A4 and A5, of the various devices of the cutting bridges P1 and P2, of the device R1 for rotation of the cross-cut portions, and of the arrest means (not illustrated) for positioning the portions of plate properly under each cutting bridge.

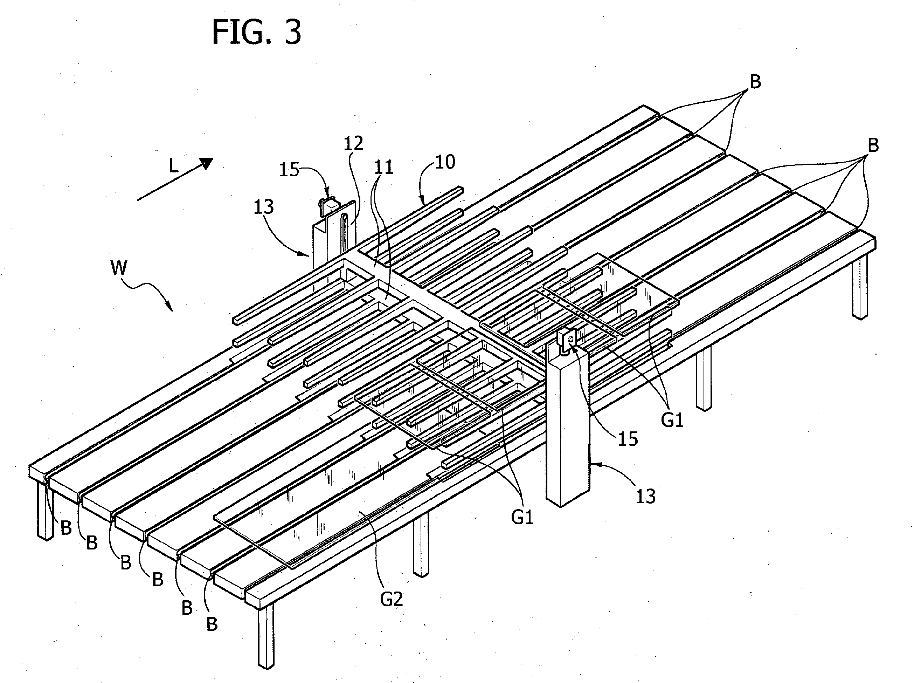

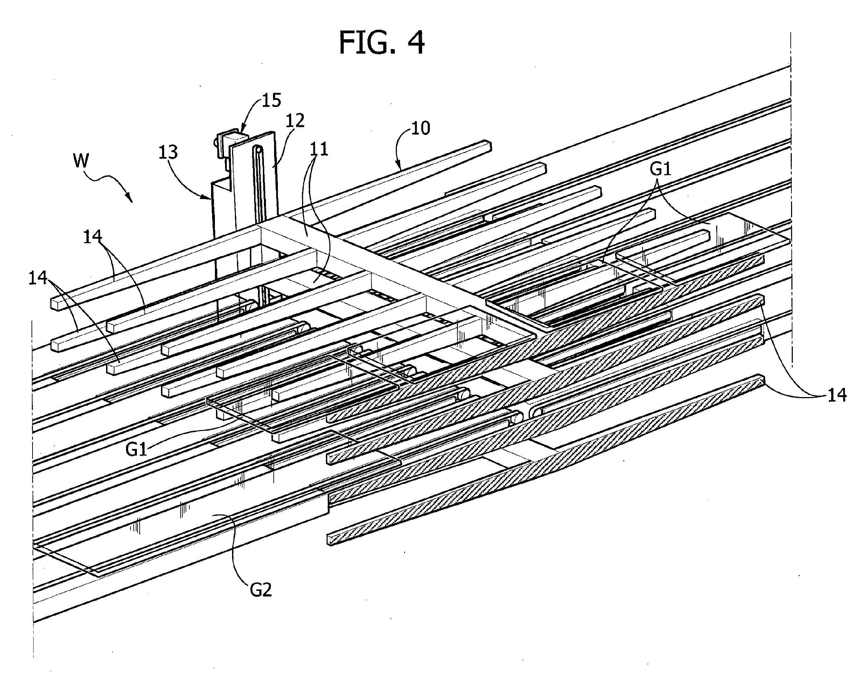

Figures 3 and 4 show the example of embodiment of the waiting/accumulation section W that is described in the aforementioned document No. EP 2 518 029. The reference number 10 designates as a whole the rack structure comprising a plurality of cross members 11 set on top of one another and apart from one another, and rigidly connected at their ends to two lateral uprights 12 that are guided vertically on two lateral fixed supporting columns 13.

Extending longitudinally from the cross members 11, in the two opposite directions, are supporting arms 14 that are consequently set in planes on top of one another and apart from one another.

The two supporting columns 13 are provided at the top with motor means 15 for governing vertical displacement of the rack 10. The mechanical transmission between the output shaft of the motor units 15 and the structure of the rack 10 may be of any known type, for example of the belt type (as illustrated schematically in the drawings) or of the external-thread/internal-thread type and may envisage motors and/or actuators that are also of any known type. The motor means are controlled by the electronic control unit E that positions the rack 10 in the desired vertical position in each step of operation of the machine.

With reference to Figure 2, set on the rack 10, and in particular on its uppermost shelf defined by the arms 14, are four portions of plate designated by T1a, T1b, T1c and T1d, which are raised with respect to the conveying surface A waiting to undergo further machining or be unloaded from the machine M.

With particular reference to Figures 3 and 4, it may be noted that the plates G1 that are already semifinished are kept raised above the conveying surface A by the rack 10, and the plate G2 can pass through the waiting section W and proceed towards the second cutting bridge P2, without being hindered by the plates G1 or by the rack 10.

Of course, the specific operating cycle of the machine depends upon the layout of the cutting lines on the plate of laminated glass G (Figure 1).

The machine illustrated in Figure 1 comprises a waiting/accumulation section W set between the first cutting bridge P1 and the second cutting bridge P2 on which portions of plate cut in the first cutting bridge P1 can be stopped, waiting to be further cut in a position corresponding to the second bridge P2.

Moreover, in the example of Figure 1, two devices R1, R2 are provided for rotation of the portions of plate, set downstream of one another. Specifically, the device R1 is set in a position corresponding to the waiting section W, whilst the device R2 is set immediately after the first cutting bridge P1.

Since the first cutting bridge P1 can be exploited for carrying out cuts also in Y and Z, as illustrated in the document No. EP 2 518 029, finished portions of plate can be obtained already at the first cutting bridge P1. In this case, the finished portions of plate may even not be fed along the conveying surface A through the second cutting bridge P2. The machine can in fact be provided with means (of any known type and not illustrated) for unloading finished portions of plate directly downstream of the first cutting bridge P1.

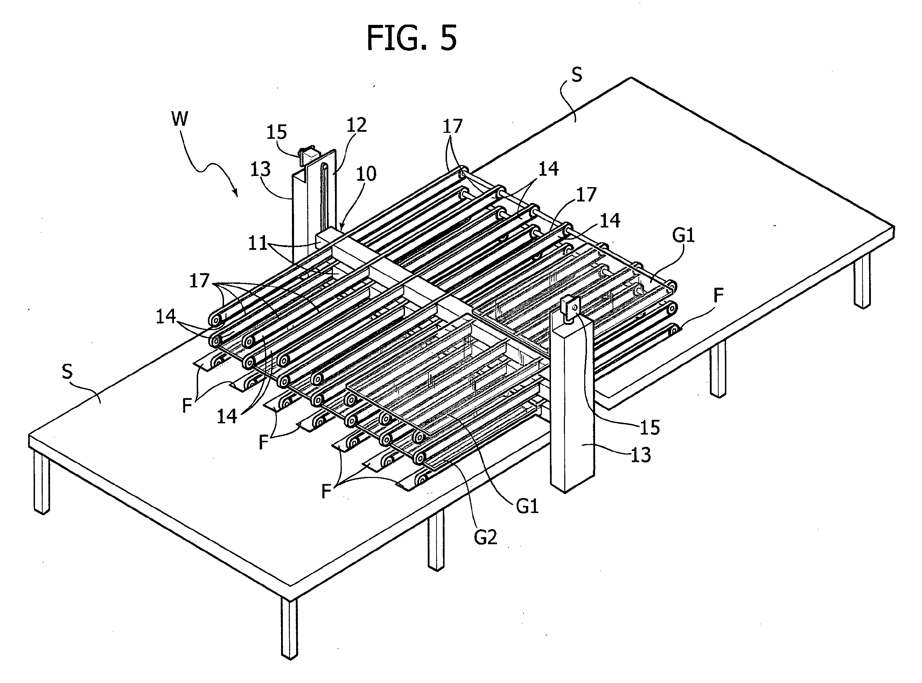

Preferred embodiments of the machine according to the invention are described in what follows with reference to Figures 5-12. As already mentioned above, the machine according to the invention has the same general configuration as the machine of Figure 1, but differs from this as regards the structure and constitution of the accumulation section W.

In Figures 5-12, the parts common to those of Figure 1 are designated by the same reference numbers. As already mentioned above, the constructional details of the machine have not been illustrated, both in so far as they can be obtained in any known way and in so far as their elimination from the drawings renders the latter more readily understandable. In particular, there have not been illustrated the details of the conveyor belts for conveying the plates on the conveying surface, the details of the devices provided in a position corresponding to each cutting bridge, the details of the devices for imparting a rotation on the cross-cut portions through 90°, and the details of the arrest means for positioning the plate in the proper position under each cutting bridge. All the aforesaid parts can be obtained in any of the ways known to persons skilled in the branch.

In the ensuing description, various specific details are illustrated aimed to an in-depth understanding of the embodiments. The embodiments may be obtained without one or more of the specific details, or with other methods, components, materials, etc. In other cases, known structures, constructional items, materials, or operations are not illustrated or described in detail, in so far as they can be obtained in any known way and also in so far as they do not fall, taken in themselves, within the scope of the present invention.

With reference to Figure 5, the rack 10 comprises auxiliary conveying means 17 provided on board the shelves of the rack, to bring about longitudinal advance of the portions of plate set on the shelves of the rack.

In particular, and with reference to the annexed figures regarding the preferred embodiments, the auxiliary conveying means comprise a plurality of belt conveyors 17 associated to the longitudinal arms 14 of the rack 10.

Figure 5 shows an embodiment in which, in the proximity of the accumulation section W, the main conveying surface A of the machine M comprises a supporting bench S, set both upstream and downstream of the accumulation station W, and the supporting bench S is provided with longitudinal slits F designed to let through the supporting arms 14 that extend longitudinally in both directions starting from each cross member 11 of the rack 10. The supporting bench S is provided with means (not illustrated) for feeding the plate G or portions of plate G1 and G2 thereon in the longitudinal direction L of the machine, and with means (not illustrated) for keeping the plate raised with respect to the conveying surface A so as to facilitate advance of the plate and its possible rotation in the horizontal plane by means of the rotation device R1. The means for keeping the plate raised with respect to the conveying surface A may, for example, be a plurality of tiny holes made in the surface of the supporting bench S, from which compressed air is made to exit. There is consequently created an air cushion on which the plates "float". In this situation, the plates can be easily turned, given that friction has been reduced.

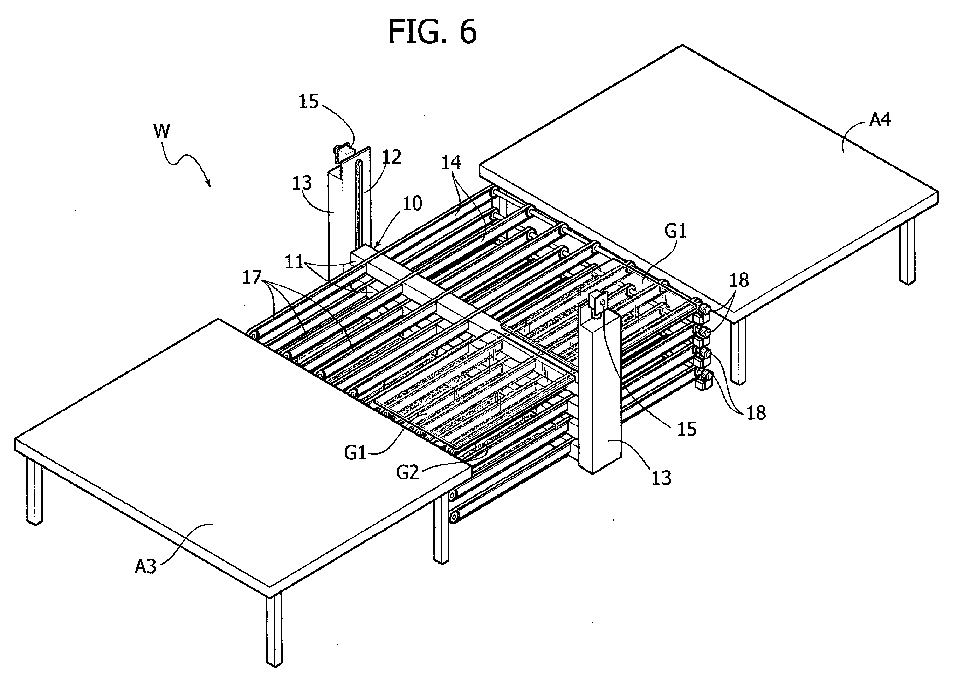

Illustrated, instead, in Figure 6 is the most versatile embodiment, in which the main conveying surface A of the machine M is interrupted in the area where the accumulation section W is present, and the supporting arms 14 that extend longitudinally in both directions starting from each cross member 11 of the rack 10 themselves define the main conveying surface A for the plate of laminated glass G and for the portions G1 and G2 cut therefrom.

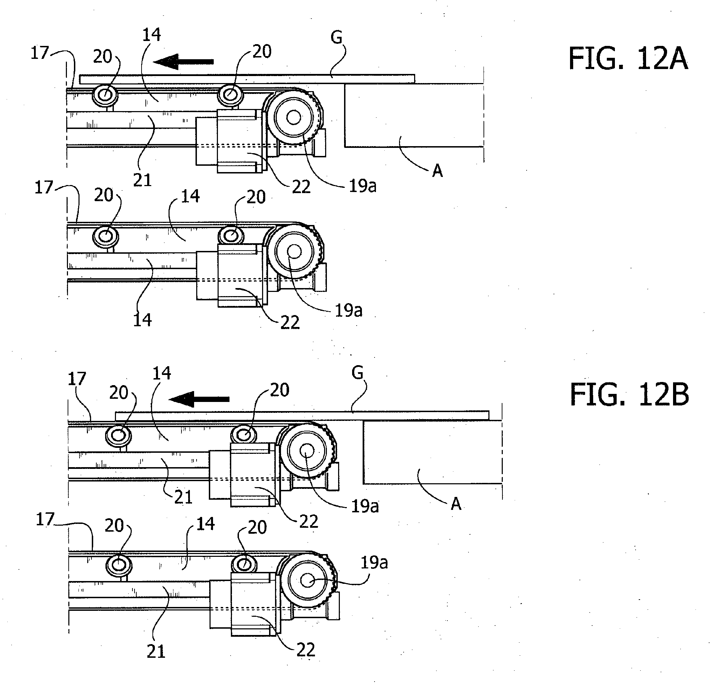

In this case, associated to the supporting arms 14 of the rack 10 of the accumulation section W are lifting means 20 (see Figures 12A and 12B) that can be displaced between a lowered, resting, position and a raised, operative, position in which the lifting means 20 are activated for providing a surface on which the plate or a portion thereof can be moved and rotated. In the embodiment illustrated, the lifting means 20 comprise a plurality of pivoting wheels 20 carried by a bar 21 and distributed uniformly throughout the length of the supporting arms 14. The bar 21 is displaced between the lowered position (Figure 12B) and the raised position (Figure 12A) by means of fluid actuators 22. The means for raising the bars 21 carrying the wheels 20 are not illustrated in the figures for simplicity of representation and also because they can be obtained in any known way and, taken in themselves, do not fall within the scope of the present invention.

Preferably, and as illustrated in Figure 12A, in the accumulation station W only the wheels 20 associated to the longitudinal arm 14 that is located in the proximity of the main conveying surface A are brought into their raised, operative, condition, whereas the wheels of the other arms remain in the lowered resting position.

The adoption of lifting means (20) associated to the arms of the rack of the accumulation section, for providing a surface on which the plate (G) or a portion (G1, G2) thereof can be moved and rotated easily (R1) constitutes a characteristic of the invention even taken in itself, irrespective of whether the accumulation section is provided in a machine with just one cutting bridge or with two cutting bridges.

Figure 6 shows the accumulation station W in its completely lowered position, where its first shelf defined by the first cross member 11 and by the arms 14 is at the level of the conveying surface A defined by the surfaces of the sections A3 and A4.

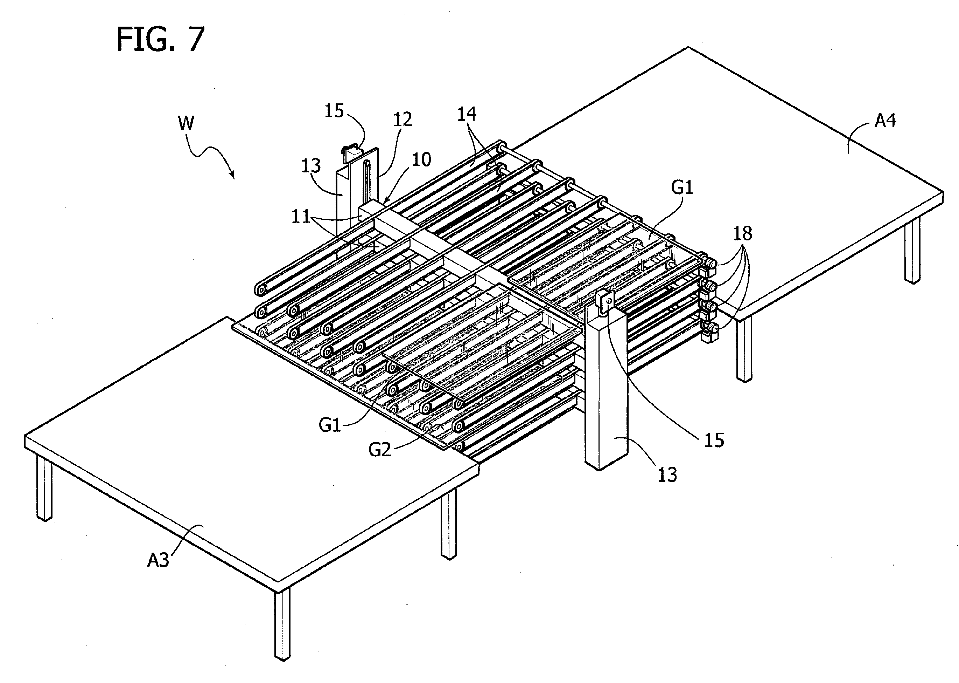

Figure 7 illustrates, instead, the accumulation station W in an intermediate position, in which the first and second shelves are raised with respect to the level of the conveying surface A and the third shelf is receiving the plate G2.

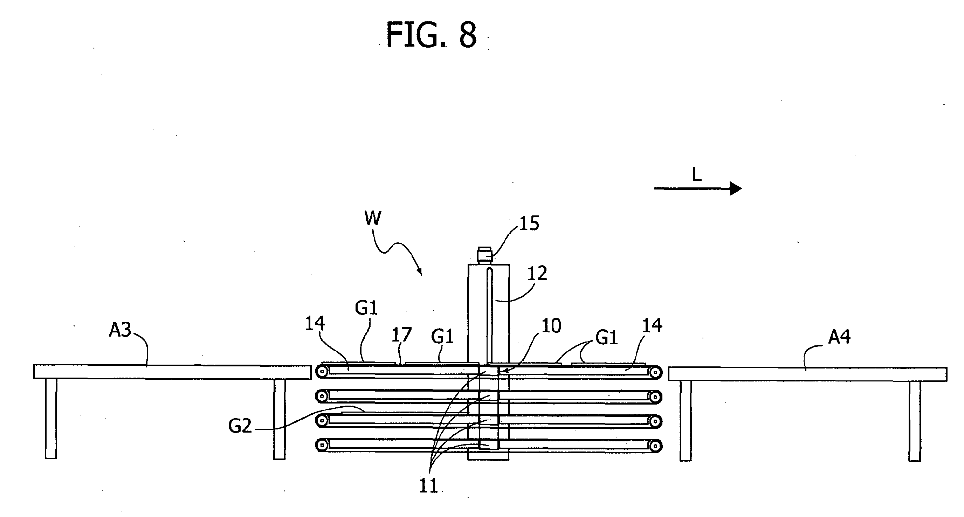

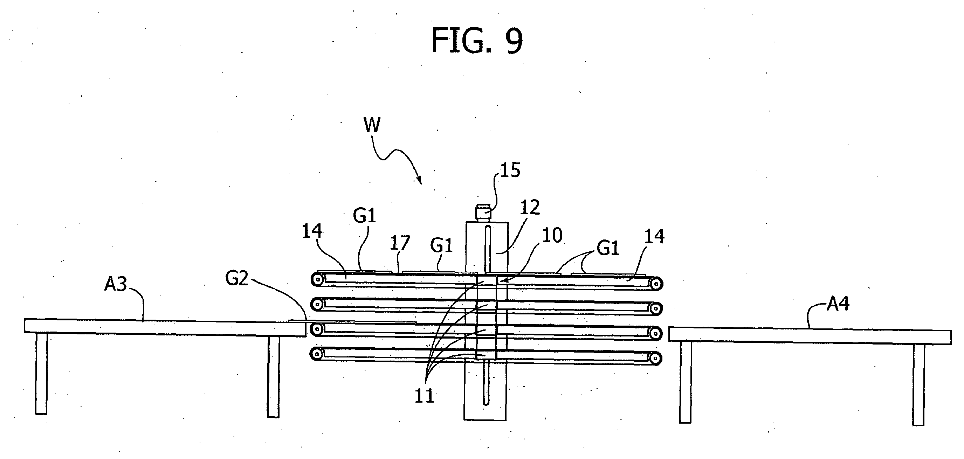

Figures 8 and 9 are side views of the accumulation station W in the two conditions illustrated in Figures 6 and 7, respectively.

With reference to Figures 8 and 9, it may be seen that it is possible to decide in an arbitrary way to fill the first shelf and then the third shelf of the rack leaving the second shelf empty, which may be filled after filling the third shelf, by simply getting the rack to drop by one shelf. In the case of the embodiment illustrated in Figure 5, instead, if the second shelf is left empty and the third shelf is filled, before it is possible to gain access again to the second shelf, it is necessary to empty the third shelf and then get the rack to drop by two shelves; otherwise, the plate on the third shelf interferes with the supporting bench S.

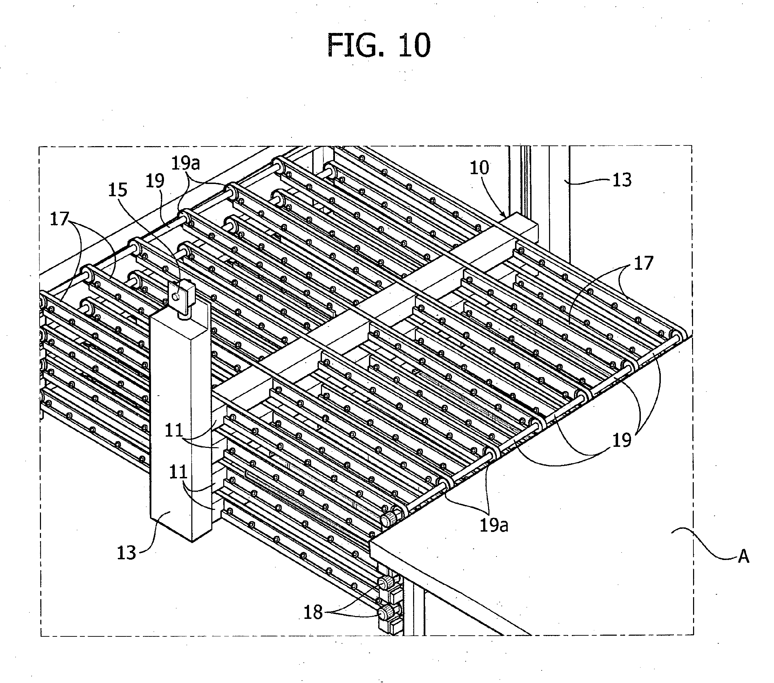

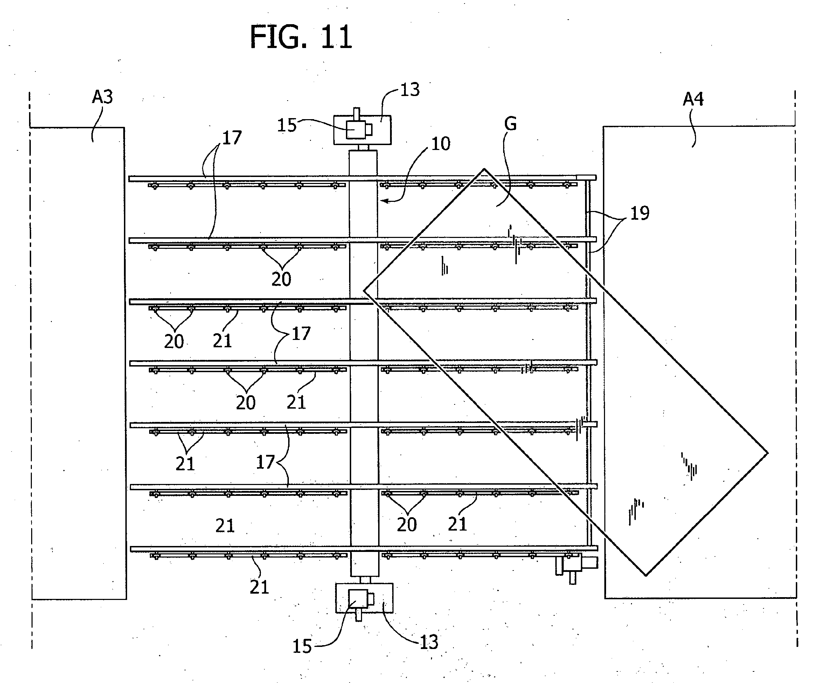

With reference to Figures 10 and 11, each of the longitudinal arms 14 is provided with a belt conveyor 17. The set of the conveyors is governed by a electric motor 18 that sets a shaft 19 connected to transmission gears 19a in rotation. The constructional details are not illustrated in detail in the figures for reasons of simplicity.

Likewise, the details of the means that move the bar 21 carrying the pivoting wheels 20 are not illustrated either in order to simplify the drawings.

With reference to the solution shown in Figure 6, it may be noted that the flexibility of the machine increases considerably in so far as, since the supporting bench S that before created a limitation in the order of loading and unloading of the rack (which had absolutely to follow a logic of a LIFO - Last In First Out - type, i.e., the last plate loaded was the first to be unloaded) has disappeared, now it is possible to reverse and choose at will the order of loading/unloading of the shelves of the rack. In fact, since the supporting bench S is no longer present, the rack loaded with plates or portions of plate can be moved at will above and/or below the plate-conveying surface A, without interfering with the supporting bench S. In this way, the flexibility of the machine M is further optimized.

Of course, without prejudice to the principle of the invention, the details of construction and the embodiments may vary widely with respect to what has been described and illustrated herein purely by way of example, without thereby departing from the scope of the present invention.

In particular, the teachings of the invention may obviously be adapted also to the case of a machine with the two cutting bridges set along two successive portions of line that are oriented at 90° with respect to one another. In this case, a single rotation device R can be provided adjacent to the first cutting bridge, for rotating the cross-cut portions that are to be further divided by the first cutting bridge.

## Claims

1. A machine (M) for cutting a plate (G) of laminated glass, comprising:
- a main conveying surface (A) for conveying the plate of laminated glass (G) and the portions (G1, G2) cut therefrom, provided with means (B) for feeding the plate (G) or portions of plate (G1, G2) thereon in a longitudinal direction (L) of the machine;
- at least one cutting bridge (P1) set in a fixed position over the conveying surface (A) and oriented crosswise with respect to said longitudinal direction (L), for carrying out operations of cutting of the plate (G) along a cutting line (p₁) of the machine, transverse with respect to said longitudinal direction (L); and
- at least one device (R1) for imparting a rotation of 90° in the horizontal plane on a portion of plate in the form of cross-cut portion (T) or in the form of cross-cut subportion (T1a, T1b, T1c, T1d), after it has been obtained by means of a cutting operation at the cutting bridge (P1), so that said cross-cut portion (T) or cross-cut subportion (T1a, T1b, T1c, T1d) can in turn be further divided into subportions,
- a second cutting bridge (P2) set downstream of the first cutting bridge (P1), and
- a waiting section (W) situated between the first and second cutting bridges (P1, P2), so that said waiting section is able to accumulate a plurality of portions of plate,
**characterized in that** said waiting section (W) comprises:
- a rack (10) having a plurality of shelves set on top of one another and apart from one another, which can be displaced vertically to bring any one of the shelves of the rack (10) to the level of the main conveying surface (A) so that said waiting section is able to accumulate a plurality of portions of plate (G1, G2) on said shelves set on top of one another and at a distance apart; and
- said rack (10) comprises auxiliary conveying means (17) provided on board one or more of said rack shelves (10) to bring about longitudinal advance of the portions of plate (G1, G2) set on top of said rack shelves.

2. The machine according to Claim 1, **characterized in that** said rack comprises:
- a plurality of cross members (11) set on top of one another and vertically apart from one another rigidly connected at their ends to two lateral uprights (12);
- two lateral supporting columns (13), vertically guided on which are the two lateral uprights (12); and
- a plurality of supporting arms (14) that extend longitudinally in one or both directions starting from each cross member (11) in such a way as to define said shelves of the rack (10),
and **in that** said auxiliary conveying means (17) comprise a plurality of belt conveyors (17) associated to said longitudinal arms (14) of the rack (10).

3. The machine according to Claim 2, **characterized in that** in the proximity of said accumulation section (W) the main conveying surface (A) of said machine (M) comprises a supporting bench (S), set both upstream and downstream of said accumulation station (W), wherein said supporting bench (S) is provided with longitudinal slits (F) designed to be traversed by said supporting arms (14) that extend longitudinally in both directions starting from each cross member (11) of the rack (10).

4. The machine according to Claim 3, **characterized in that** also said supporting bench (S) is provided with means (B) for feeding the plate (G) or portions of plate (G1, G2) thereon in a longitudinal direction (L) of the machine, and with means for keeping the plate raised with respect to the conveying surface so as to facilitate advance of the plate and its possible rotation in the horizontal plane by means of said rotation device (R1).

5. The machine according to Claim 2, **characterized in that** the main conveying surface (A) of said machine is interrupted in the area where the accumulation section (W) is present, and said supporting arms (14) that extend longitudinally starting from each cross member (11) of the rack (10) define the main conveying surface (A) for the plate of laminated glass (G) and for the portions (G1, G2) cut therefrom.

6. The machine according to Claim 5, **characterized in that** associated to said supporting arms (14) of the rack (10) of the accumulation section (W) are lifting means (20) that can be displaced (21) between a lowered, resting, position and a raised, operative, position in which said lifting means (20) are activated for providing a surface on which the plate (G) or a portion (G1, G2) thereof can be moved and rotated (R1).

7. The machine according to Claim 6, **characterized in that** said lifting means (20) comprise a plurality of pivoting wheels (20) carried by a bar (21) and distributed uniformly throughout the length of the supporting arms (14), and wherein said bar (21) is displaced between the lowered position and the raised position by means of fluid actuators (22).

8. The machine according to Claim 7, **characterized in that** in the accumulation station (W) only the lifting means (20) associated to the longitudinal arm (14) that is located in the proximity of the main conveying surface (A) of said machine are brought into their raised and operative condition, whereas the lifting means of the remaining arms remain in the lowered resting position.

## Patentansprüche

1. Maschine (M) zum Schneiden einer laminierten Glasplatte (G), umfassend:
- eine Haupttransportfläche (A) zum Transportieren der laminierten Glasplatte (G) und der davon geschnittenen Teile (G1, G2), die mit Einrichtungen (B) zum Zuführen der Platte (G) oder von Plattenteilen (G1, G2) in einer Längsrichtung (L) der Maschine versehen ist,
- wenigstens eine Schneidbrücke (P1), die an einer fixen Position über der Transportfläche (A) angeordnet ist und quer zu der Längsrichtung (L) ausgerichtet ist, um Operationen zum Schneiden der Platte (G) entlang einer Schneidlinie (p₁) der Maschine und quer in Bezug auf die Längsrichtung (L) auszuführen, und
- wenigstens eine Vorrichtung (R1) zum Vorsehen einer Drehung um 90° in der horizontalen Ebene an einem Teil der Platte in der Form eines quer geschnittenen Teils (T) oder in der Form eines quer geschnittenen Unterteils (T1a, T1b, T1c, T1d), nachdem dieser durch eine Schneidoperation an der Schneidbrücke (P1) erhalten wurde, sodass der quer geschnittene Teil (T) oder der quer geschnittene Unterteil (T1a, T1b, T1c, T1d) wiederum weiter in Unterteile geteilt werden kann,
- eine zweite Schneidbrücke (P2), die nach der ersten Schneidbrücke (P1) angeordnet ist, und
- einen Warteabschnitt (W), der zwischen den ersten und zweiten Schneidbrücken (P1, P2) angeordnet ist, sodass der Warteabschnitt eine Vielzahl von Plattenteilen akkumulieren kann,
**dadurch gekennzeichnet, dass** der Warteabschnitt (W) umfasst:
- ein Regal (10) mit einer Vielzahl von Fächern, die übereinander und voneinander beabstandet angeordnet sind, wobei das Regal (10) vertikal verschoben werden kann, um eines der Fächer auf die Ebene der Haupttransportfläche (A) zu bringen, sodass der Warteabschnitt eine Vielzahl von Plattenteilen (G1, G2) auf den übereinander und voneinander beabstandeten Fächern akkumulieren kann,
wobei des Regal (10) eine Hilfstransporteinrichtung (17) umfasst, die an einer oder mehreren Regalfächern (10) vorgesehen ist, um einen Längsvorschub der auf die Regalfächer gesetzten Plattenteile (G1, G2) zu bewerkstelligen.

2. Maschine nach Anspruch 1, **dadurch gekennzeichnet, dass** das Regal umfasst:
- eine Vielzahl von Quergliedern (11), die übereinander und vertikal voneinander beabstandet angeordnet sind und an ihren Enden starr mit zwei lateralen Pfosten (12) verbunden sind,
- zwei laterale Haltesäulen (13), an denen die zwei lateralen Pfosten (12) vertikal geführt werden, und
- eine Vielzahl von Haltearmen (14), die sich längs in einer oder beiden Richtungen von jedem Querglied (11) ausgehend derart erstrecken, dass sie die Fächer des Regals (10) definieren,
wobei die Hilfstransporteinrichtung (17) eine Vielzahl von Transportbändern (17) umfasst, die mit den Längsarmen (14) des Regals (10) assoziiert sind.

3. Maschine nach Anspruch 2, **dadurch gekennzeichnet, dass** die Haupttransportfläche (A) der Maschine (M) in Nachbarschaft zu dem Akkumulationsabschnitt (W) eine Haltebank (S) umfasst, die sowohl vor und nach der Akkumulationsstation (W) angeordnet ist, wobei die Haltebank (S) mit Längsschlitzen (F) versehen ist, die ausgebildet sind, um durch die Haltearme (14) gequert zu werden, die sich in beiden Längsrichtungen von jedem Querglied (11) des Regals (10) ausgehend erstrecken.

4. Maschine nach Anspruch 3, **dadurch gekennzeichnet, dass** auch die Haltebank (S) mit Einrichtungen (B) zum Zuführen der Platte (G) oder von Plattenteilen (G1, G2) in einer Längsrichtung (L) der Maschine und mit Einrichtungen zum Halten der gehobenen Platte in Bezug auf die Transportfläche, um einen Vorschub der Platte und eine mögliche Drehung in der horizontalen Ebene mittels der Dreheinrichtung (R1) zu bewerkstelligen, versehen ist.

5. Maschine nach Anspruch 2, **dadurch gekennzeichnet, dass** die Haupttransportfläche (A) der Maschine in dem Bereich, wo der Akkumulationsabschnitt (W) vorhanden ist, unterbrochen ist, und dass die Haltearme (14), die sich in der Längsrichtung von jedem Querglied (11) des Regals (10) ausgehend erstrecken, die Haupttransportfläche (A) für die laminierte Glasplatte (G) und für die davon geschnittenen Teile (G1, G2) definieren.

6. Maschine nach Anspruch 5, **dadurch gekennzeichnet, dass** mit den Haltearmen (14) des Regals (10) des Akkumulationsabschnitts (W) Hebeeinrichtungen (20) assoziiert sind, die zwischen einer gesenkten Ruheposition und einer gehobenen Betriebsposition, in welcher die Hebeeinrichtungen (20) aktiviert sind, um eine Fläche vorzusehen, auf der die Platte (G) oder ein Plattenteil (G1, G2) bewegt und gedreht (R1) werden können, versetzt werden können.

7. Maschine nach Anspruch 6, **dadurch gekennzeichnet, dass** die Hebeeinrichtungen (20) eine Vielzahl von Schwenkrädern (20) umfassen, die durch einen Balken (21) getragen werden und gleichmäßig über die Länge der Haltearme (14) verteilt sind, wobei der Balken (21) mittels Fluidstellgliedern (22) zwischen der gesenkten Position und der gehobenen Position versetzt wird.

8. Maschine nach Anspruch 7, **dadurch gekennzeichnet, dass** in der Akkumulationsstation (W) nur die Hebeeinrichtung (20), die mit dem Längsarm (14) in Nachbarschaft zu der Haupttransportfläche (A) der Maschine assoziiert ist, zu der gehobenen Betriebsposition versetzt wird, während die Hebeeinrichtungen der verbleibenden Arme an den gesenkten Ruhepositionen verbleiben.

## Revendications

1. Machine (M) pour découper une plaque (G) de verre laminé, comprenant :
- une surface de transport principale (A) pour transporter la plaque de verre laminé (G) et les parties (G1, G2) découpées de celle-ci, munie de moyens (B) pour acheminer la plaque (G) ou les parties de plaque (G1, G2) sur celle-ci dans une direction longitudinale (L) de la machine ;
- au moins un pont de découpe (P1) établi dans une position fixe au-dessus de la surface de transport (A) et orienté transversalement par rapport à ladite direction longitudinale (L), pour effectuer des opérations de découpe de la plaque (G) le long d'une ligne de découpe (p₁) de la machine, transversalement par rapport à ladite direction longitudinale (L) ; et
- au moins un dispositif (R1) pour communiquer une rotation de 90° dans le plan horizontal sur une partie de plaque sous forme de partie de coupe transversale (T) ou sous forme de sous-partie de coupe transversale (T1 a, T1 b, T1c, T1d), après son obtention au moyen d'une opération de découpe au niveau du pont de découpe (P1), de sorte que ladite partie de coupe transversale (T) ou ladite sous-partie de coupe transversale (T1a, T1b, T1c, T1d) puisse à son tour être divisée en sous-parties,
- un deuxième pont de découpe (P2) établi en aval du premier pont de découpe (P1), et
- une section d'attente (W) située entre les premier et deuxième ponts de découpe (P1, P2), de sorte que ladite section d'attente soit capable d'accumuler une pluralité de parties de plaque,
**caractérisée en ce que** ladite section d'attente (W) comprend :
- un bâti (10) ayant une pluralité d'étagères établies les unes au-dessus des autres et séparées les unes des autres, qui peuvent être déplacées verticalement pour amener l'une quelconque des étagères du bâti (10) au niveau de la surface de transport principale (A) de sorte que ladite section d'attente soit capable d'accumuler une pluralité de parties de plaque (G1, G2) sur lesdites étagères établies les unes au-dessus des autres et espacées d'une certaine distance ; et
- ledit bâti (10) comprend des moyens de transport auxiliaires (17) prévus à bord d'une ou de plusieurs étagère(s) parmi lesdites étagères du bâti (10) pour provoquer l'avance longitudinale des parties de plaque (G1, G2) établies au-dessus desdites étagères du bâti.

2. Machine selon la revendication 1, **caractérisée en ce que** ledit bâti comprend :
- une pluralité d'éléments transversaux (11) établis les uns au-dessus des autres et séparés verticalement les uns des autres rigidement reliés au niveau de leurs extrémités à deux montants latéraux (12) ;
- deux colonnes de support latérales (13), guidées verticalement sur lesquelles se trouvent les deux montants latéraux (12) ; et
- une pluralité de bras de support (14) qui s'étendent longitudinalement dans une ou deux directions à partir de chaque élément transversal (11) de manière à définir lesdites étagères du bâti (10),
et **en ce que** lesdits moyens de transport auxiliaires (17) comprennent une pluralité de transporteurs à courroie (17) associés auxdits bras longitudinaux (14) du bâti (10).

3. Machine selon la revendication 2, **caractérisée en ce qu'**à proximité de ladite section d'accumulation (W) la surface de transport principale (A) de ladite machine (M) comprend un banc de support (S), établi à la fois en amont et en aval de ladite station d'accumulation (W), où ledit banc de support (S) est muni de fentes longitudinales (F) conçues pour être traversées par lesdits bras de support (14) qui s'étendent longitudinalement dans deux directions à partir de chaque élément transversal (11) du bâti (10).

4. Machine selon la revendication 3, **caractérisée en ce qu'**également ledit banc de support (S) est muni de moyens (B) pour acheminer la plaque (G) ou les parties de plaque (G1, G2) sur celle-ci dans une direction longitudinale (L) de la machine, et de moyens pour maintenir la plaque surélevée par rapport à la surface de transport de manière à faciliter l'avance de la plaque et sa rotation possible dans le plan horizontal au moyen dudit dispositif de rotation (R1).

5. Machine selon la revendication 2, **caractérisée en ce que** la surface de transport principale (A) de ladite machine est interrompue dans la zone où la section d'accumulation (W) est présente, et lesdits bras de support (14) qui s'étendent longitudinalement à partir de chaque élément transversal (11) du bâti (10) définissent la surface de transport principale (A) pour la plaque de verre laminé (G) et pour les parties (G1, G2) découpées de celle-ci.

6. Machine selon la revendication 5, **caractérisée en ce que** des moyens de levage (20) qui peuvent être déplacés (21) entre une position de repos abaissée et une position de fonctionnement surélevée où lesdits moyens de levage (20) sont activés pour fournir une surface sur laquelle la plaque (G) ou une partie (G1, G2) de celle-ci peut être déplacée et mis en rotation (R1) sont associés auxdits bras de support (14) du bâti (10) de la section d'accumulation (W).

7. Machine selon la revendication 6, **caractérisée en ce que** lesdits moyens de levage (20) comprennent une pluralité de roues de pivotement (20) portées par une barre (21) et réparties uniformément sur toute la longueur des bras de support (14), et où ladite barre (21) est déplacée entre la position abaissée et la position surélevée au moyen d'actionneurs fluidiques (22).

8. Machine selon la revendication 7, **caractérisée en ce que**, dans la station d'accumulation (W), uniquement les moyens de levage (20) associé au bras longitudinal (14) qui se trouve à proximité de la surface de transport principale (A) de ladite machine sont amenés dans leur état de fonctionnement surélevé et, tandis que les moyens de levage des bras restants restent dans la position de repos abaissée.
